(19) Europäisches Patentamt
European Patent Office
Office européen des brevets

(11) **EP 3 306 884 B1**

(12) **EUROPEAN PATENT SPECIFICATION**

(45) Date of publication and mention
of the grant of the patent:
**05.06.2019  Bulletin 2019/23**

(51) Int Cl.:
***H04L 27/34*** *(2006.01)*

(21) Application number: **16306322.5**

(22) Date of filing: **06.10.2016**

(54) **FREQUENCY OFFSET ESTIMATION FOR PROBABILISTICALLY SHAPED QAM SIGNAL**

FREQUENZ-OFFSET-SCHÄTZUNG ZUR PROBABILISTISCH GEFORMTE QAM-SIGNALE

ESTIMATION DE DÉCALAGE DE FRÉQUENCE POUR SIGNAL QAM FAÇONNÉ DE MANIÈRE PROBABILISTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.04.2018  Bulletin 2018/15**

(73) Proprietor: **Alcatel Lucent**
**91620 Nozay (FR)**

(72) Inventors:
- **QIAN, Hu**
  **70435 Stuttgart (DE)**
- **BUCHALI, Fred**
  **70435 Stuttgart (DE)**

(74) Representative: **MERH-IP Matias Erny Reichl Hoffmann**
**Patentanwälte PartG mbB**
**Paul-Heyse-Strasse 29**
**80336 München (DE)**

(56) References cited:
- **BUCHALI FRED ET AL: "Rate Adaptation and Reach Increase by Probabilistically Shaped 64-QAM: An Experimental Demonstration", JOURNAL OF LIGHTWAVE TECHNOLOGY, IEEE SERVICE CENTER, NEW YORK, NY, US, vol. 34, no. 7, 1 April 2016 (2016-04-01), pages 1599-1609, XP011609199, ISSN: 0733-8724, DOI: 10.1109/JLT.2015.2510034 [retrieved on 2016-03-03]**
- **YANKOV METODI P ET AL: "Constellation Shaping for Fiber-Optic Channels With QAM and High Spectral Efficiency", IEEE PHOTONICS TECHNOLOGY LETTERS, IEEE SERVICE CENTER, PISCATAWAY, NJ, US, vol. 26, no. 23, 1 December 2014 (2014-12-01), pages 2407-2410, XP011563532, ISSN: 1041-1135, DOI: 10.1109/LPT.2014.2358274 [retrieved on 2014-11-04]**

## Description

## Technical Field

This application relates to signal recovery method and apparatus for use in the field of optical communications, particularly for performing frequency offset estimation in optical communication systems.

## Background

Advanced optical communication systems adopt higher-order quadrature amplitude modulation (m-QAM) in combination with coherent detection to reach enhanced spectral efficiency and provide high-speed transmission. To implement optical coherent detection, the detected signal is sampled by an analog-to-digital converter (ADC) at the receiver side and is subsequently recovered in a digital signal processing (DSP) module. In general, a blind signal recovery includes blind frequency offset estimation that estimates a possible frequency mismatch between a carrier frequency at the transmitter side and a local oscillator frequency at the receiver side, and accurate frequency offset estimation is critical for phase compensation.

Lately, probabilistic shaping technique is proposed to overcome the capacity gap between the Shannon limit and the performance of optical signals modulated using QAM constellations. In the case of probabilistic shaping, a distribution matcher is applied to map data bits into non-uniformly distributed QAM symbols. More specifically, different modulation symbols are transmitted with different probabilities, and the outer symbols may occur less often than those in uniformly distributed QAM schemes, which leads to failure in frequency estimation. However, currently there is no good solution for this problem.

Accordingly, there is a need for a signal recovery method and a corresponding device that are able to perform frequency offset estimation more flexibly also for a received signal which carries non-uniformly distributed symbols, especially for signals with a symbol distribution which might be dynamically changed for system performance optimization. Also, a more reliable frequency estimation method which provides high accurate frequency offset estimation is useful for carrier phase recovery in an optical coherent receiver.

Summary

In view of this need, the present document proposes a new scheme for estimating frequency offset of a received coherently-detected signal. In particular, the present document discloses a method and an apparatus having the features of the respective independent claims for frequency offset estimation used in optical coherent detection. The invention is defined by the subject-matter of the independent claims. Preferred embodiments are defined in the dependent claims. Aspects or embodiments that do not fall under the scope of the claims are useful to understand the invention.

An aspect of the disclosure relates to a processing method for processing received symbols having a probabilistically shaped distribution. The method may comprise receiving an optical data sequence that comprises a plurality of complex valued signal samples, called (raw) symbols. In general, each of the received (raw) symbols has a respective magnitude (amplitude) value and a respective phase value. The received signal samples (raw symbols) correspond to respective points located at respective positions of a constellation according to the respective magnitudes and the respective phase values thereof and can be represented by respective complex number values.

In embodiments, the received signal may comprise probabilistically-shaped Quadrature Amplitude Modulation (PS QAM) symbols as generated by a transmitter applying the PSQAM for modulating an optical signal. The PSQAM may have a dynamically-changeable probability distribution. In particular, each of the received symbols may be transmitted with a respective probability. For example, a plurality of first symbols may be transmitted with probabilities higher than the probabilities of a plurality of second symbols. According to an embodiment, the predetermined probability distribution may be a Gaussian-like probability distribution.

The method comprises obtaining a second threshold value relating to a plurality of second symbols within a number of received symbols. The second symbols have amplitude values larger than a second amplitude value. The second threshold value may depend upon the probability distribution of the probabilistically shaped symbols. The second threshold value may be received from a transmitter or a network control unit. The second threshold value may also be determined by the receiver from information about the probability distribution that is used by the transmitter.

The method also comprises adapting, depending on the second threshold value, a scaling factor for a number of first symbols within the number of received symbols. According to the disclosure, the first symbols have amplitude values smaller than a first amplitude value. In particular, the second amplitude value may be larger than the first amplitude value. As a result of the scaling, the amplitude values and the influence of the first symbols can be increased to improve a subsequent frequency offset estimation.

The method may further comprise counting the number of first symbols within the number of received symbols. Moreover, the method may comprise determining a first relationship between the counted number of first symbols and the number of received symbols. In an embodiment, the method may also comprise adapting the first amplitude value depending on the determined first relationship.

The method may further comprise counting a number of second symbols within the number of received symbols and determining a second relationship between the counted number of second symbols and the number of received symbols. The method may further comprise adapting the second amplitude value depending on the determined second relationship.

According to embodiments, the method may comprise adapting the first amplitude value based on a first ratio of the number of first symbols to the number of received symbols. The method may also comprise adapting the second amplitude value based on a second ratio of the number of second symbols to the number of received symbols. More specifically, the adapting of the first amplitude value and the second amplitude value may comprise comparing the first ratio with a first threshold value and comparing the second ratio with a second threshold value.

In an embodiment, the adapting of the first amplitude value and the second amplitude value may further comprise increasing the first amplitude value if the first ratio is smaller than the first threshold value and/or decreasing the second amplitude value if the second ratio is smaller than the second threshold value. By this way, the first amplitude value and the second amplitude value may be appropriately determined, so that the first symbols and/or the second symbols can be properly selected for frequency estimation.

In embodiments, the scaling factor may depend on the first and second threshold value. Furthermore, the method may comprise determining the scaling factor based on a symbol distribution ratio of the first threshold value to the second threshold value. In particular, the scaling factor may increase with the symbol distribution ratio. In other words, for a larger symbol distribution ratio a larger scaling factor may be selected.

According to the disclosure, the method may further comprise applying a zero padding operation for a number of third symbols within a number of received symbols. The third symbols may have amplitude values larger than the first amplitude value and smaller than the second amplitude value. Accordingly, the complex values of the third symbols may be replaced or multiplied by zeros for frequency estimation so that the third symbols are not taken into account for frequency estimation. As such, the impact of those third symbols on the estimation of frequency offset may be properly reduced (e.g. eliminated), which can further increase the estimation accuracy.

Moreover, in case the received symbols are Quadrature Amplitude Modulation (QAM) symbols having a dynamically changeable probability distribution, the first threshold value and the second threshold value may be associated with the probability distribution of the received symbols.

According to the disclosure, the method may further comprise determining a frequency offset of the received symbols based on the scaled first symbols and the second symbols. In an embodiment, the frequency offset may be determined using a fourth-power algorithm.

The method may further comprise applying a phase rotation operation to the scaled first symbols and the second symbols based on the fourth-power algorithm.

Configured as above, by adjusting the first amplitude value and the second amplitude value, the first symbols and the second symbols may be selected properly. Moreover, it is beneficial to also adapt the scaling factor according to the symbol distribution ratio, so that the influence of the first symbols on the frequency offset estimation can be optimized. Accordingly, an accurate and flexible frequency offset estimation method is provided for a received signal comprising non-uniformly distributed symbols. The proposed method therefore enables an accurate and flexible frequency offset estimation especially for signals with dynamically-changeable symbol distribution that is used for system performance optimization. Based on the determined frequency offset, the signal carrier phase can be compensated and transmission symbols properly detected.

Another aspect of the disclosure relates to a frequency offset estimating method.

The method comprises selecting a plurality of first symbols from the received signal samples. In particular, each of the plurality of first symbols may have a respective first magnitude/amplitude smaller than a first boundary magnitude value. In other words, the first symbols lie in the complex constellation diagram within a first circle having a radius corresponding to the first boundary magnitude value. For this reason, the first symbols are also called inner symbols. Moreover, the method may comprise selecting a plurality of second symbols from the received signal samples. In particular, each of the plurality of second symbols may have a respective second magnitude/amplitude larger than a second boundary magnitude value. The first boundary magnitude value differs from the second boundary magnitude value. For example, the second boundary magnitude value may be larger than the first boundary magnitude value. In other words, the second symbols lie in the complex constellation diagram outside of a second circle having a radius corresponding to the second boundary magnitude value, and the second symbols are therefore called outer symbols. The method may also comprise determining a frequency offset of the received optical data sequence based on the selected plurality of first symbols and the selected plurality of second symbols.

According to the disclosure, the determination of the frequency offset may comprise applying a phase rotation operation to the plurality of first symbols and the plurality of second symbols. In some embodiments, the frequency offset may be determined using a fourth-power algorithm. Accordingly, the method may further comprise applying the phase rotation operation based on the fourth-power algorithm. The method may further comprise applying a scaling factor to the plurality of first symbols prior to determining the frequency offset of the received optical data sequence. That is, the complex number values of the first symbols may be multiplied by the scaling factor and the respective magnitudes of the first symbols may be therefore scaled, thereby enlarging the influence/impact of the first symbols for the frequency offset estimation. In other words, the first (inner) symbols are scaled to enlarge their amplitudes for the frequency offset determination.

More specifically, the method may comprise applying the scaling factor to the plurality of first symbols prior to applying the phase rotation operation to the plurality of first symbols. Accordingly, the applied scaling factor provides a weighting to the first symbols in case the impact of the first symbols on the frequency estimation should be increased due to symbol probability distributions which have been applied to the optical data sequence (i.e. the predetermined probability distribution). As a result, the influence of the first symbols can be increased based on the probability distributions of the transmitted symbols to improve the resulting frequency offset estimation. Alternatively, the scaling factor may be applied to the plurality of second symbols prior to determining the frequency offset of the received optical data sequence. For example, the scaling factor applied to the plurality of second symbols may be decreased to make the impact of the first symbols relatively higher according to the probability distributions of the transmitted symbols.

In embodiments, the plurality of first symbols may be selected based on the first boundary magnitude value. Similarly, the plurality of second symbols may be selected based on the second boundary magnitude value. The first boundary magnitude value and the second boundary magnitude value may be dynamically adapted based on the predetermined probability distribution. For this, the method may further comprise counting a number of the received symbols. The method may also comprise counting a number of the selected first symbols. Moreover, the method may comprise counting a number of the selected second symbols.

According to the disclosure, the method may further comprise adapting the first boundary magnitude value based on a first ratio of the number of the selected first symbols to the number of the received symbols. The method may also comprise adapting the second boundary magnitude value based on a second ratio of the number of the selected second symbols to the number of the received symbols. In embodiments, the adaption of the first boundary magnitude value may comprise comparing the first ratio with a first threshold value. In embodiments, the adaption of the second boundary magnitude value may comprise comparing the second ratio with a second threshold value. According to embodiments, the first threshold value may be associated with the predetermined probability distribution of the received symbols. Also, the second threshold value may be associated with the predetermined probability distribution of the received symbols. To be more specific, the first threshold value may relate to the probability of the inner symbols, and the second threshold value may relate the probability of the outer symbols. The two threshold values may be determined by a matcher at transmitter side. Once a probability distribution for the modulation symbols is defined by the matcher, the values of the thresholds can be determined. The values of the thresholds may be sent to the received via out-of-band signaling.

For example, the distribution matcher defines the probabilities of different symbols. For 64-QAM, the distribution matcher defines the probabilities of the 64 constellation symbols. In this case, the first threshold value is the probability of the inner symbols, which is sum of the probabilities of the inner 4 symbols. The second threshold value is the probability of the outer symbols, which is the sum of the probabilities of the outer 12 symbols.

According to the disclosure, the adaption of the first boundary magnitude value may further comprise increasing the first boundary magnitude value if the first ratio is smaller than the first threshold value. Alternatively, the adaption of the first boundary magnitude value may further comprise decreasing the first boundary magnitude value if the first ratio is larger than the first threshold value. Furthermore, the adaption of the second boundary magnitude value may comprise decreasing the second boundary magnitude value if the second ratio is smaller than the second threshold value. Alternatively, the adaption of the second boundary magnitude value may comprise increasing the second boundary magnitude value if the second ratio is larger than the second threshold value. By this way, the first boundary magnitude value and the second boundary magnitude value may be appropriately determined, so that the first symbols and/or the second symbols can be properly selected for the frequency estimation. It is further noted that since the symbol probability distributions may be changed with time in order to optimize the system, these boundary magnitude values may be also adapted to varying symbol probability distributions to select the proper symbols for frequency estimation.

In embodiments, adapting the first boundary magnitude value may be terminated when the first ratio reaches or is close to the first threshold value. Further, adapting the second boundary magnitude value may be terminated when the second ratio reaches or is close to the second threshold value. The method may further comprise determining the scaling factor based on a symbol distribution ratio of the first threshold value to the second threshold value. The scaling factor may depend on the symbol distribution ratio. For example, the scaling factor may be increased with the symbol distribution ratio. Accordingly, the impact of the first symbols can be properly raised for an increased probability of the first symbols.

In embodiments, the method may further comprise applying the phase rotation operation to all received symbols. Moreover, the received symbols may comprise a plurality of third symbols in addition to the first and the second symbols. In particular, each of the plurality of third symbols may have a respective third magnitude larger than the first boundary magnitude value and smaller than the second boundary magnitude value. In other words, the third symbols are selected so that each of the plurality of third symbols has a respective third magnitude larger than the first boundary magnitude value and smaller than the second boundary magnitude value.

Since the first (inner) and the second (outer) symbols may be preferably considered for the frequency estimation, the impact of the third symbols may be reduced or neglected for the frequency estimation to improve the accuracy. The inner and outer symbols are preferable for frequency estimation because their phases are (or at least are close to) N times pi/4. The phase modulation of these symbols can be removed or at least largely removed by a 4-th power operation. The residual phase information after the 4-th power operation can then be used for frequency estimation. In other words, the inner and outer symbols provide more accurate frequency estimation than the other symbols. After the 4-th power operation, the phase of those symbols are pi or close to pi if there is no frequency offset in the received signal. The frequency offset makes the phase of the fourth power symbols drift from pi. The slope of the phase drift represents the frequency offset. Hence, the frequency offset can be determined based on the slope of the phase drift.

In embodiments, the method may further comprise applying a zero padding operation for the plurality of third symbols prior to applying the phase rotation operation to the received symbols. Thus, the third symbols between the two circuits are ignored for frequency estimation. It is preferred to not discard these symbols directly because the time interval from symbol to symbol should be the same. So the third symbols between the two circuits are preferably padded with zeros to eliminate their contribution and reserve the time interval. More specifically, the complex values of the third symbols may be replaced or multiplied by zeros for the frequency estimation so that the third symbols are not taken into account for the frequency estimation. As such, the impact of those third symbols on the estimation of frequency offset may be properly reduced (e.g. eliminated), which can further increase the estimation accuracy.

Configured as above, by adjusting the first boundary magnitude value and the second boundary magnitude value, the plurality of first symbols and the plurality of second symbols may be selected properly. Moreover, it is beneficial to also adapt the scaling factor according to the symbol distribution ratio, so that the influence of the first symbols on the frequency offset estimation can be optimized based on the probability distribution of the received symbols. Accordingly, an accurate and flexible frequency offset estimation method is provided for a received signal comprising non-uniformly distributed symbols. The proposed method also allows a reliable blind frequency offset estimation especially for signals with dynamically-changed symbol distribution that is required for system performance optimization. Based on the determined frequency offset, the signal carrier phase can be compensated and final transmission symbols properly detected.

Another aspect of the disclosure relates to a frequency offset estimating apparatus. The apparatus may be configured to receive a plurality of signal samples that have been carried by an optical data sequence. In general, each of the received samples may have at least a respective magnitude value. Also, each of the received samples may have a respective phase value. As mentioned above, the received samples may correspond to respective points located at respective positions of a constellation according to the respective magnitudes and the respective phase values thereof and can be represented by respective complex number values.

As mentioned above, the received symbols may comprise probabilistically-shaped Quadrature Amplitude Modulation (PS QAM) symbols. The PSQAM may have a predetermined probability distribution. In particular, each of the received symbols may be transmitted with a respective probability. For example, the plurality of first symbols may be transmitted with probabilities higher than the probabilities of the plurality of second symbols. In an embodiment, the predetermined probability distribution may be a Gaussian-like probability distribution. The predetermined probability distribution may be time-varying for system optimizations (e.g. optimizations in terms of data rate and/or transmission distance).

According to the disclosure, the apparatus may comprise a symbol selecting unit. The symbol selecting unit may be configured to select a plurality of first symbols from the received signal samples based on sample characteristics, e.g. sample magnitudes. In particular, each of the plurality of first symbols may have a respective first magnitude smaller than a first boundary magnitude value. Moreover, the symbol selecting unit may be configured to further select a plurality of second symbols from the received signal samples. In particular, each of the plurality of second symbols may have a respective second magnitude larger than a second boundary magnitude value. The first boundary magnitude value typically differs from the second boundary magnitude value. For example, the second boundary magnitude value may be larger than the first boundary magnitude value.

Furthermore, the apparatus may also comprise a frequency offset estimating unit. The frequency offset estimating unit may be configured to determine a frequency offset of the optical data sequence based on the selected plurality of first symbols and the selected plurality of second symbols. In embodiments, the frequency offset estimating unit may also comprise a phase rotating unit. The phase rotating unit may be configured to apply a phase rotation operation to the plurality of first symbols and the plurality of second symbols. In some embodiments, the frequency offset may be determined using a fourth-power algorithm. Accordingly, the phase rotation operation may be applied based on the fourth-power algorithm.

In embodiments, the plurality of first symbols may be applied with a scaling factor prior to determining the frequency offset of the received optical data sequence. That is, the complex number values of the first symbols may be multiplied by the scaling factor and the respective magnitudes of the first symbols may be therefore scaled, thereby enlarging the influence/impact of the first symbols for the frequency offset estimation. More specifically, the plurality of first symbols may be applied with the scaling factor prior to applying the phase rotation operation to the plurality of first symbols. Accordingly, the applied scaling factor provides a weighting to the first symbols in case the impact of the first symbols on the frequency estimation should be increased due to symbol probability distributions which have been applied to the optical data sequence (i.e. the predetermined probability distribution). As a result, the influence of the first symbols can be increased based on the probability distributions of the transmitted symbols to improve the resulting frequency offset estimation. Alternatively, the scaling factor may be applied to the plurality of second symbols prior to determining the frequency offset of the received optical data sequence. For example, the scaling factor applied to the plurality of second symbols may be decreased to make the impact of the first symbols relatively higher according to the probability distributions of the transmitted symbols.

In embodiments, the plurality of first symbols may be selected based on the first boundary magnitude value. Similarly, the plurality of second symbols may be selected based on the second boundary magnitude value. The first boundary magnitude value and the second boundary magnitude value may be adapted dynamically based on a time-varying probability distribution. Furthermore, the symbol selecting unit may comprise a counting unit. The counting unit may be configured to count a number of the received symbols. The counting unit may be configured to further count a number of the selected first symbols. Moreover, the counting unit may be configured to count a number of the selected second symbols.

According to the disclosure, an adapting unit may be configured to dynamically adapt the first boundary magnitude value based on a first ratio of the number of the selected first symbols to the number of the received symbols. The adapting unit may be configured to also adapt the second boundary magnitude value based on a second ratio of the number of the selected second symbols to the number of the received symbols. In embodiments, the adapting unit may be further configured to compare the first ratio with a first threshold value. In embodiments, the adapting unit may be configured to also compare the second ratio with a second threshold value. According to embodiments, the first threshold value may be associated with the predetermined probability distribution of the received symbols. Further, the second threshold value may be associated with the predetermined probability distribution of the received symbols.

According to the disclosure, the adapting unit may be further configured to increase the first boundary magnitude value if the first ratio is smaller than the first threshold value. Alternatively, the adapting unit may be configured to decrease the first boundary magnitude value if the first ratio is larger than the first threshold value. Furthermore, the adapting unit may be configured to decrease the second boundary magnitude value if the second ratio is smaller than the second threshold value. Alternatively, the adapting unit may be configured to increase the second boundary magnitude value if the second ratio is larger than the second threshold value. By this way, the first boundary magnitude value and the second boundary magnitude value may be appropriately determined, so that the first symbols and/or the second symbols can be properly selected for frequency estimation. It is further noted that since the symbol probability distributions may be changed with time in order to optimize the system performance, these boundary magnitude values may be also adapted to varying symbol probability distributions. For example, if the signal power is constant, the boundary values change with the probability distribution. On the other hand, if the constellation size is constant, then the boundary values do no change with the probability distribution. In any case, the boundary adaptation based on probability distribution allows setting correct boundary magnitude values when the constellation size is unknown. As mentioned above, the symbol impact is adjusted by the scaling factor.

In embodiments, adapting the first boundary magnitude value may be terminated when the first ratio reaches or is close to the first threshold value. Further, adapting the second boundary magnitude value may be terminated when the second ratio reaches or is close to the second threshold value. The adapting unit may be further configured to determine the scaling factor based on a symbol distribution ratio of the first threshold value to the second threshold value. In other words, the scaling factor may depend on the symbol distribution ratio. For example, the scaling factor may be increased with the symbol distribution ratio. Accordingly, the impact of the first symbols can be properly raised for an increased probability of the first symbols.

In embodiments, the phase rotating unit may be further configured to apply the phase rotation operation to the received symbols. Moreover, the received symbols may further comprise a plurality of third symbols in addition to the first and the second symbols. In particular, each of the plurality of third symbols may have a respective third magnitude larger than the first boundary magnitude value and smaller than the second boundary magnitude value. In other words, the third symbols are selected so that each of the plurality of third symbols has a respective third magnitude larger than the first boundary magnitude value and smaller than the second boundary magnitude value.

Since the first and the second symbols may be preferably considered for the frequency estimation due to their phases being close to N times of pi/4 (or even being N times pi/4), the impact of the third symbols may be reduced or neglected for the frequency estimation to improve the accuracy. In embodiments, the plurality of third symbols may be recorded as zeros through a zero padding operation prior to applying the phase rotation operation to the received symbols. In other words, the complex values of the third symbols may be replaced or multiplied by zeros for the frequency estimation so that the third symbols are not taken into account for the frequency estimation. As such, the impact of those third symbols on the estimation of frequency offset may be properly reduced, which can further increase the estimation accuracy.

Configured as above, by adjusting the first boundary magnitude value and the second boundary magnitude value, the plurality of first symbols and the plurality of second symbols can be selected properly. Moreover, by adapting the scaling factor according to the symbol distribution ratio, the influence of the first symbols on the frequency offset estimation can be optimized based on the probability distribution of the received symbols. Accordingly, accurate and flexible frequency offset estimation can be achieved for a received signal comprising non-uniformly distributed symbols. The proposed apparatus is beneficial as it also allows a reliable frequency offset estimation especially for signals with dynamically-changed symbol distributions that are required for system performance optimization.

Another aspect of the disclosure relates to an optical receiver. The optical receiver may comprise an optical-to-electrical (O/E) converter, an analog-to-digital (A/D) converter and a processor configured to perform any of the above methods.

Implementations of the apparatus may include using, but not limited to, one or more processor, one or more application specific integrated circuit (ASIC) and/or one or more field programmable gate array (FPGA). Implementations of the apparatus may also include using other conventional and/or customized hardware such as software programmable processors.

It will be appreciated that method steps and device features may be interchanged in many ways. In particular, the details of the disclosed device can be implemented as a method and vice versa, as the skilled person will appreciate.

## Brief Description of the Figures

Some embodiments of apparatus and/or methods in accordance with embodiments of the present invention are now described, by way of example only, and with reference to the accompanying drawings, in which:

Fig. 1(a) graphically illustrates change of symbol points in a QPSK constellation after applying blind frequency offset estimation;

Fig. 1(b) graphically illustrates change of symbol points in a 64QAM constellation after applying a blind frequency offset estimation;

Fig. 2 schematically illustrates an optical receiver setup for coherently detecting a received optical signal according to embodiments of the disclosure;

Fig. 3 graphically illustrates probability distributions for probabilistically-shaped 64-QAM (PS-64-QAM) signals according to embodiments of the disclosure;

Fig. 4 graphically illustrates a constellation diagram of a PS-64-QAM signal according to embodiments of the disclosure;

Fig. 5 schematically illustrates the proposed apparatus for frequency offset estimation according to embodiments of the disclosure;

Fig. 6 schematically illustrates processing steps for the proposed symbol processing method according to embodiments of the disclosure; and

Fig. 7 schematically illustrates processing steps for the proposed frequency offset estimating method corresponding to the apparatus of **Fig. 5** according to embodiments of the disclosure;

## Detailed Description

A basic aspect of this disclosure relates to a signal recovery method and apparatus for use in the field of optical communications, particularly for performing frequency offset estimation at a coherent optical receiver.

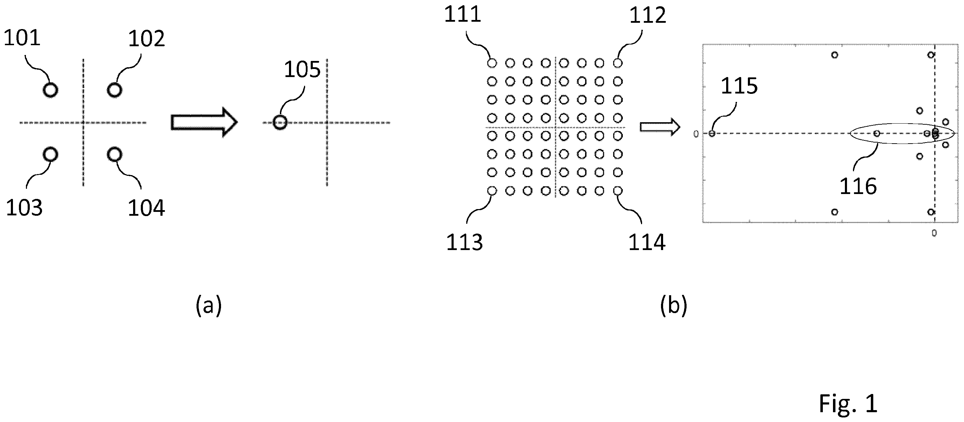

A blind frequency offset estimation algorithm may use fourth power operation to remove the phase modulation of an original signal. In the case of quadrature phase shift keying (QPSK) modulation, as illustrated by **Fig. 1(a)** where the two axes of the constellation diagram represent the amplitudes for the in-phase and quadrature components of the received symbols, all of the constellation points **101, 102, 103, 104** are mapped to the same position, i.e. the position of the point **105,** after being applied with the fourth power operation, which indicates that the phase modulation is completely removed after the fourth power operation. As a result, a constant phase drift led by the frequency offset is observed, which can be easily characterized.

As mentioned above, in order to improve spectral efficiency of an optical system, higher-order modulation formats are adopted, such as 16QAM, 32QAM and 64QAM. In that case, phase modulation is removed for the diagonal constellation points, while the other constellation points give rise to a residual phase after the fourth power operation. Since the outer constellation points play a major role in frequency estimation due to their large amplitudes, the fourth power approach is able to provide accurate frequency estimation by removing the phase modulation of the most outer points. **Fig. 1(b)** shows an example of 64QAM constellation where the two axes of the constellation diagram represent the amplitudes for the in-phase and quadrature components of the received symbols. As illustrated by **Fig. 1(b),** the most outer four points **111, 112, 113, 114** are mapped to the position of point **115** after being applied with the fourth power operation, while the other diagonal constellation points are mapped to the positions indicated by **116** depending on their amplitudes, which are smaller than that of the most outer points but with the phase modulation removed.

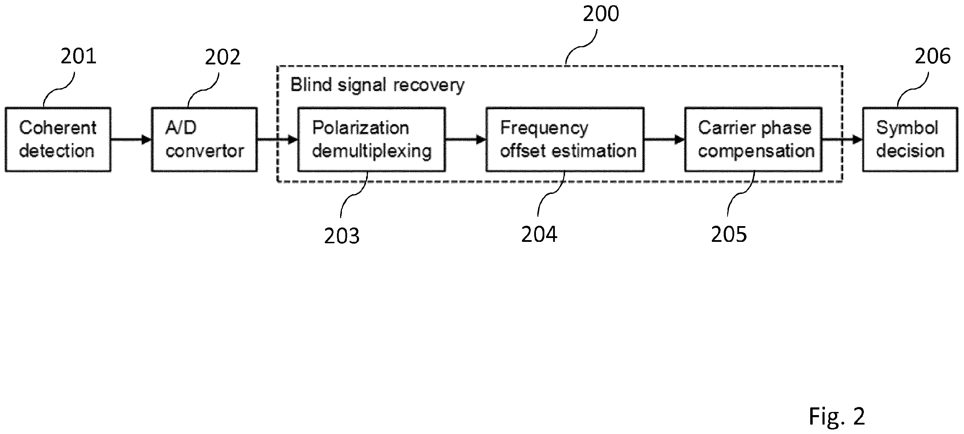

**Fig. 2** is a schematic illustration of an optical receiver setup for coherently detecting a received optical signal according to embodiments of the disclosure. An optical receiver **201** receives optical signals output from a transmission link and converts the optical signals into corresponding electrical signals. The converted electrical signals comprise in-phase and quadrature components in an analog form of complex numbers and are then sampled via an analog-to-digital converter (ADC) **202**. The ADC may sample the complex signals at a sampling rate that is higher than a symbol rate of the signals. The sampled values are then resampled, e.g. in a DSP. Accordingly, the in-phase and quadrature components of the sampled electrical signals can be used to recover, by the DSP, a position of a corresponding sampled electrical complex signal (i.e. a corresponding symbol) on a constellation diagram as shown in **Fig. 1(a)** and **Fig. 1(b).**

The sampled electrical complex signals are then provided to a processor **200** which implements blind signal recovery. The processor **200** may be a digital signal processor (DSP). The blind signal recovery may comprise a blind polarization demultiplexing section **203** in case the received optical signals comprise two polarization-division-multiplexed optical signal components. However, a person of skill in the art would readily recognize that signals comprising only one polarization component may be applied. The blind signal recovery also comprises a frequency offset estimation section **204** which estimates a frequency difference/mismatch between a carrier frequency at the transmitter side and a local-oscillator frequency at the receiver. The blind signal recovery further comprises a carrier phase compensation section **205** for compensating a phase rotation of the received constellation caused by the laser frequency drift. After passing the signal recovery processing sections, e.g. the polarization demultiplexing section **203,** the frequency offset estimation section **204** and the carrier phase compensation section **205,** the resulting electrical signals may be applied with a symbol decision block **206** for determining final symbols values (e.g. complex number values at decision instants) of the transmission system carried in the electrical signals. The final transmission symbol values as decided by the symbol decision block 206 are then forwarded for further processing such as error correction.

The frequency offset estimation section **204** (also called "frequency estimation") may comprise a blind frequency offset estimation algorithm that applies a fourth power operation to remove the phase modulation of the original received signals. As mentioned, it is beneficial to enhance the accuracy of the frequency offset estimation section **204** for compensating the carrier phase in the carrier phase compensation section **205**.

In an embodiment, the received optical signals comprise a probabilistic shaped signal. For example, a probabilistically-shaped quadrature amplitude modulation (PS QAM) signal may be received at the optical receiver **201**. A PS QAM signal can be generated by using a distribution matcher at the transmitter side to map the data bits into non-uniformly distributed QAM symbols, as described in detail in the document "Buchali et.al., 'Experimental Demonstration of Capacity Increase and Rate-Adaption by Probabilistically Shaped 64-QAM', in Proc. European Conference on Optical Communication, September 2015". As a result, each modulation symbol is assigned with different probabilities and different modulation symbols are transmitted with different probabilities after modulation imposed by the distribution matcher.

The functions of the various elements shown in Fig. 2, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

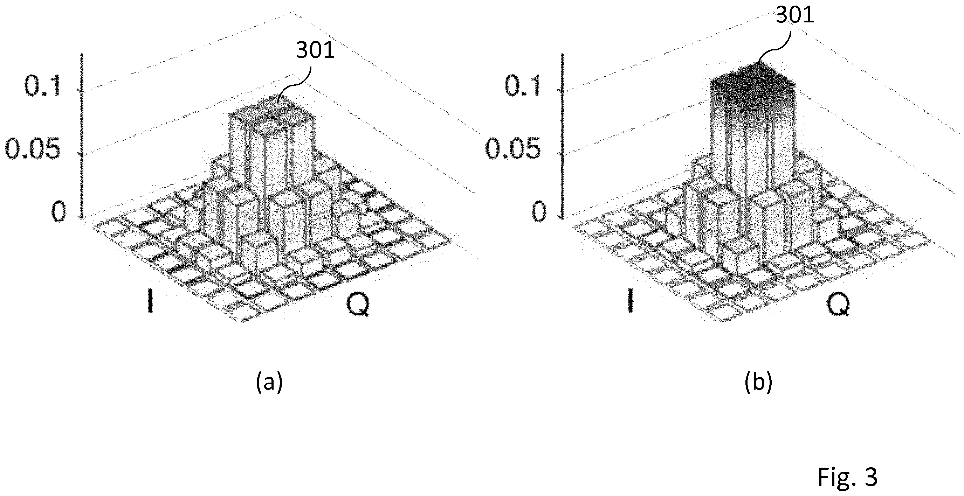

**Fig. 3** is graphical illustration for probability distributions for probabilistically-shaped 64-QAM (PS-64-QAM) signals. The I- and Q- axes represent the amplitudes for the in-phase and quadrature components of the received symbols, and the vertical axis represents the symbol probability. As can be seen, the bars **301** indicate the probability of each modulation symbol. According to an embodiment, a Gaussian-like probability distribution is assigned to enable the modulated signal to approach the Shannon capacity. This leads to an increased probability for the inner symbols but a decreased probability for the outer symbols. Moreover, different probability distributions may be applied and the distribution shape may be changed to optimize the performance of the transmission system, e.g. to increase reach for a fixed net data rate and/or to yield a higher net data rate for a fixed distance as compared to conventional systems. For example, **Fig. 3(a)** represents a PS-64-QAM signal which has a probability distribution different from that of a PS-64-QAM signal as represented in **Fig. 3(b).** As illustrated, the distribution in **Fig. 3(b)** is more shaped than the distribution in **Fig. 3(a).** It is further noted that information regarding probability distributions of the signals after modulation imposed by the distribution matcher at the transmitter side may be also available at the receiver side, e.g. by transmission via a control path or control plane through processes of Operations, Administration and Management (OAM). The first and second threshold values may be derived from this information regarding the probability distribution of the symbols. The threshold values may be determined on the transmitter side and sent to the receiver side, or alternatively the thresholds may be determined on the receiver side based on the probability distribution information which may be available on the receiver, e.g. via signaling from the transmitter. Thus, there are different ways how the receiver can obtain the threshold values.

Accordingly, the information regarding probability distributions of the received symbols can be used for signal recovery at the receiver side. Due to the characteristics of the symbol probability distribution, i.e. the Gaussian-like probability distribution, the inner symbols occur more often than the outer symbols, which leads to higher contribution of the inner symbols to the frequency estimation. Thus, it is beneficial to also use predominantly the inner symbols for the frequency offset estimation according to the disclosure. In particular, when the probability of the outer symbols decreases, i.e. the outer symbols have a lower probability, which implies the probability of the inner symbols increases, the impact of the inner symbols on the frequency offset estimation may be enlarged to improve estimation accuracy.

To achieve this, the inner symbols and the outer symbols may be properly selected. According to the disclosure, the selection is based on the symbol characteristics (e.g. symbol magnitudes) of the received signal and the symbol probability distribution which has been applied to the transmitted signal (i.e. the probability distribution of the received symbols). More specifically, the symbol probability distribution may define a first expected value for the probability of the inner symbols and a second expected value for the probability of the outer symbols, which can be used to determine whether a symbol should be regarded as one of the inner symbols and whether a symbol should be regarded as one of the outer symbols. In the following, the complex valued signal samples in blind signal recovery (e.g. after conversion into the electrical domain and some processing such as polarization demultiplexing and for the purpose of frequency offset estimation) are called (raw) symbols even before a final symbol decision is made to determine the symbols that are transmitted by the optical transmission system.

In detail, a group of (raw) symbols may be pre-assumed as the inner (raw) symbols and the probability thereof is compared to the first expected value. More neighboring symbols may be added to this group of symbols if its probability is smaller than the first expected value. On the contrary, symbols may be removed from this group if its probability is larger than the first expected value. Similarly, a group of symbols may be pre-assumed as the outer symbols and the probability thereof is compared to the second expected value. More neighboring symbols may be added to this group of symbols if its probability is smaller than the second expected value. On the contrary, symbols may be removed from this group if its probability is larger than the second expected value.

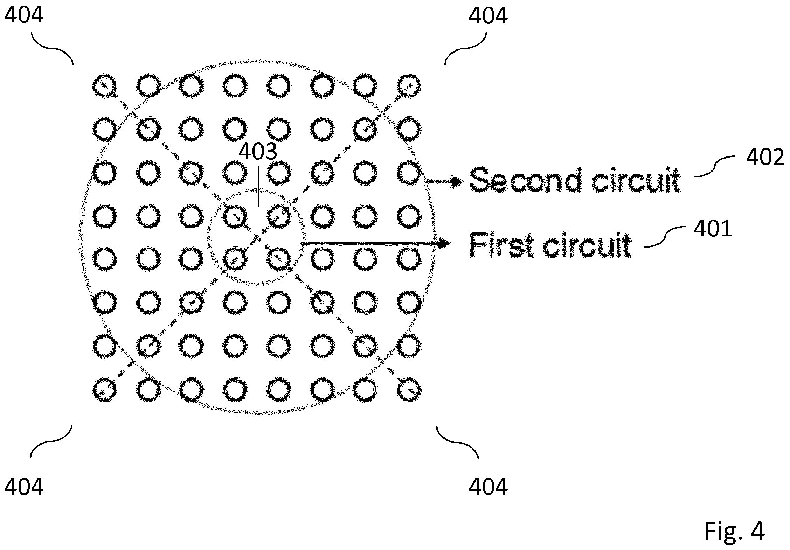

As mentioned above, since the outer symbols occur less often than the inner symbols in the case of probabilistic shaping, the inner symbols may be also used mainly for frequency offset estimation according to the disclosure, and the impact thereof may be properly adjusted (e.g. enlarged or reduced depending on the probability distribution). In an embodiment, as shown by Fig. 4 which illustrates a constellation diagram of a PS-64-QAM signal, the inner four diagonal constellation points **403** are selected for frequency offset estimation due to their stronger impact when the probability of the outer constellation points **404** decreases. As mentioned above, the axes indicate the amplitudes of the received symbols. In other words, when the probability of the outer constellation points **404** decreases, the inner four diagonal constellation points become important and are used for frequency offset estimation.

Further according to **Fig. 4,** two circles, i.e. the first circle **401** and the second circle **402** (both called "circuit" in Fig. 4), are defined for the four inner constellation points and the twelve outer constellation points of the PS-64-QAM signal, respectively. In detail, the symbols with amplitude smaller than the radius of the first circuit are recorded as inner symbols **403,** while those with amplitude larger than the radius of the second circuit are recorded as outer symbols **404.** Thus, the size (i.e. radius) of the circuit corresponds to a boundary magnitude value used for determining whether a constellation point belongs to one of the inner constellation points or to one of the outer constellation points. In an embodiment, the radius of the first circuit **401** corresponds to a first boundary magnitude value for selecting the inner constellation points **403,** and the radius of the second circuit **402** corresponds to a second boundary magnitude value for selecting the outer constellation points **404.** Moreover, other symbols between the two circuits **401** and **402** may be neglected for frequency offset estimation according to an embodiment.

Subsequently, the contribution from the inner symbols **403** may be adjusted by a scaling factor according to the probability distribution which has been applied to generate the PS-64-QAM signal at the transmitter. As indicated above, the complex number values of the inner symbols may be multiplied by the scaling factor and the respective magnitudes (amplitudes) of the inner symbols may be therefore scaled to enlarge the influence/impact of the inner symbols for the frequency offset estimation. The scaling factor can be also applied to the outer symbols to enlarge the impact of the outer symbols. It should be noted that the scaling factor can be applied to any of the received symbols to construct proper impact thereof for the frequency estimation.

When the probabilities of the outer symbols **404** are relatively large, which infers that the outer symbols **404** play a major role in frequency offset estimation, the amplitude of the inner symbols **403** therefore remains small, i.e. without applying the scaling factor to the inner symbols **403,** in order not to increase the influence of the inner symbols for the frequency estimation due to their low impact. Alternatively, this can also be achieved by reducing the scaling factor applied to the inner symbols or by increasing the scaling factor applied to the outer symbols. As such, the weighting for the inner symbols **403** is kept small for frequency offset estimation as the inner symbols **403** do not have strong influence on frequency estimation. On the other hand, when the probabilities of the outer symbols **404** decrease, the inner symbols **403** play a major role in frequency offset estimation, the weighting of the inner symbols **403** should therefore be enlarged by the scaling factor applied to the inner symbols **403** or the weighting of the outer symbols **404** should be reduced by the scaling factor applied to the outer symbols **404** to increase the impact of the inner symbols **403** for the frequency offset estimation.

Moreover, the radii of the first circuit **401** and the second circuit **402** for selecting the inner and outer constellation points **403, 404** may be properly adapted based on the probability distribution. When the number of the inner symbols **403** is too small, the radius of the first circuit **401** may be increased, i.e. the first boundary magnitude value for selecting the inner constellation points **403** may be increased to enlarge the size of the first circuit **401** within which inner constellation points **403** are located, thereby increasing the number of inner constellation points **403** to be considered for frequency offset estimation. On the other hand, when the number of the outer symbols **404** is too small, the radius of the second circuit **402** may be decreased, i.e. the second boundary magnitude value for selecting the outer constellation points **404** may be decreased to reduce the size of the second circuit **402** outside which outer constellation points **404** are located, thereby increasing the number of outer constellation points **404** to be considered for frequency offset estimation.

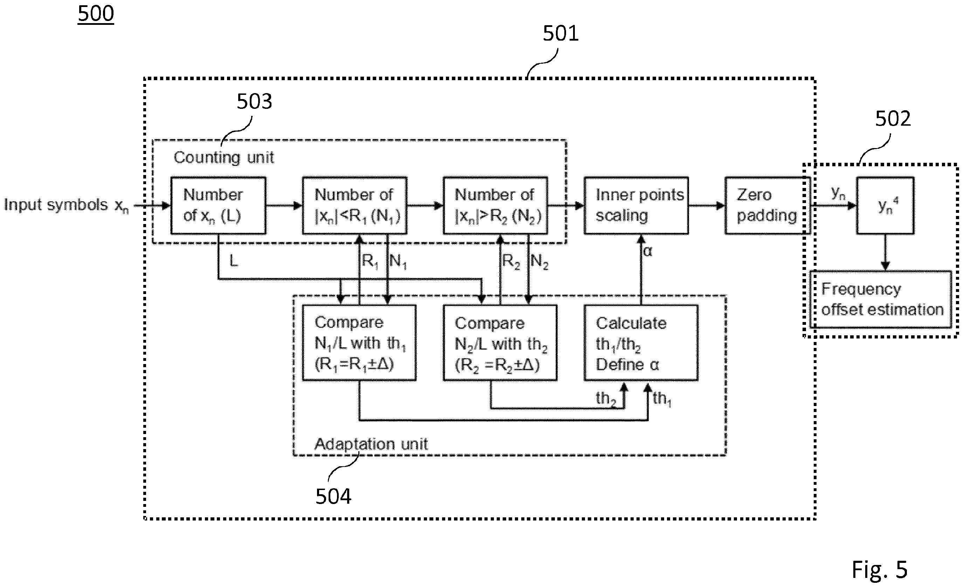

Accordingly, through proper adaptions of the radii for the first and the second circuits as well as the scaling factor for the inner symbols, more accurate frequency offset estimation can be guaranteed. A corresponding apparatus for frequency offset estimation according to embodiments of the disclosure is schematically illustrated in **Fig. 5.**

The frequency offset estimation apparatus **500** includes a symbol selecting unit **501** and a frequency offset estimating unit **502** and can be implemented by a processor. For example, the frequency offset estimation apparatus **500** can be implemented in the processor **200** of **Fig. 2.** After receiving a plurality of symbols from the coherent receiver **201** and ADC **202,** the symbol selecting unit **501** selects inner symbols **403** based on a first boundary magnitude value and selects outer symbols **404** based on the second boundary magnitude value. As mentioned above, each of the inner symbols **403** has a respective magnitude smaller than the first boundary magnitude value, and each of the outer symbols **404** has a respective magnitude larger than the second boundary magnitude value. In an embodiment, the second boundary magnitude value is larger than the first boundary magnitude value. Further, the frequency offset estimating unit **502** determines a frequency offset of the received optical signal, i.e. the frequency difference between a carrier frequency at the transmitter and a local-oscillator frequency at the receiver, based on the selected inner symbols **403** and the selected outer symbols **404.**

In embodiments, the symbol selecting unit **501** includes a counting unit **503** and an adapting unit **504.** The counting unit **501** counts the overall number of symbols in a data sequence (L), the number of selected inner symbols **403** ($N_1$) and the number of selected outer symbols **404** ($N_2$). These numbers L, $N_1$ and $N_2$ are then passed to the adapting unit **504,** which has a control to the radii of the first and the second circuits **401, 402** and the scaling factor. The ratio of the number of the selected inner symbols **403** to the overall number of symbols and the ratio of the number of the selected outer symbols **404** to the overall number of symbols, $N_1/L$, $N_2/L$ respectively, are calculated and compared with expected values, $th_1$ and $th_2$, respectively. According to an embodiment, the expected threshold values, $th_1$ and $th_2$, are defined by the probability distribution. Since information regarding the probability distributions of the received signal which are predetermined at the transmitter can be also obtained by the receiver, the expected threshold values, $th_1$ and $th_2$, can be derived from these probability distributions. To be more specific, the probability distribution defines the probabilities of the symbols. For example, $th_1$ is the probability of the inner symbols, which in the case of the illustrative example is sum of the probabilities of the inner symbols. Further, th2 is the probability of the outer symbols, which is the sum of the probabilities of the outer symbols.

The measurement may be based on a certain length of symbols, i.e. the number of symbols. In Fig.5, $X_n$ represents the n-th received symbol, L represents the total number of symbols, $R_1$ represents the radius of first circuit and $R_2$ represents the radius of second circuit. Moreover, $N_1$ refers to the number of symbols whose amplitude is smaller than the first circuit, and $N_2$ refers to the number of symbols whose amplitude is larger than the second circuit.

To adapt the radius for the first circuit **401,** the radius of the first circuit $R_1$ is increased by a step $\Delta_1$ if the ratio of the number of the inner symbols **403** to the overall number of symbols is smaller than the expected value $th_1$, and the radius of the first circuit $R_1$ is decreased

by step $\Delta_1$ if the ratio of the number of the inner symbols **403** to the overall number of symbols is larger than the expected value $th_1$. Similarly, to adapt the radius for the second circuit **402**, the radius of the second circuit $R_2$ is decreased by a step $\Delta_2$ if the ratio of the number of the outer symbols **404** to the overall number of symbols is smaller than the expected value $th_2$, and the radius of the second circuit $R_2$ is increased by step $\Delta_2$ if the ratio of the number of the outer symbols **404** to the overall number of symbols is larger than the expected value $th_2$.

It should be noted that the steps $\Delta_{1,2}$ may be also optimized for the trade-off of computational complexity against accuracy. In an embodiment, the steps $\Delta_{1,2}$ may be adjusted after one or more iterations. In an embodiment, a step $\Delta_{1+}$ for the increasing direction may be different from a step $\Delta_{1-}$ for the decreasing direction. In an embodiment, step $\Delta_1$ for adapting the radius for the first circuit **401** may be different from step $\Delta_2$ for adapting the radius for the second circuit **402**. In an embodiment, $\Delta_1$ for adapting the radius for the first circuit **401** may be the same as $\Delta_2$ for adapting the radius for the second circuit **402**.

This adaptation process may repeat increasing/decreasing the radii $R_1$ and $R_2$ based on the expected values $th_1$ and $th_2$ and may stop, when the calculated ratio $N_1/L$ and/or $N_2/L$ reaches or is close to the corresponding expected value. As a result, the radii $R_1$ and $R_2$ can be properly determined so that the inner symbols **403** and outer symbols **404** and the numbers thereof can be properly selected for frequency estimation. Accordingly, the ratio of the number of the inner symbols **403** to the number of the outer symbols **404** $N_1/N_2$ may also be close or reach the ratio of the expected values $th_1/th_2$.

In an embodiment as illustrated by Fig. 5, a step $\Delta_{1+}$ for the increasing direction may be the same as a step $\Delta_{1-}$ for the decreasing direction, and $\Delta_1$ for adapting the radius for the first circuit **401** may be the same as $\Delta_2$ for adapting the radius for the second circuit **402**, all of which can be denoted as $\Delta$. In other words, $\Delta$ as shown in Fig. 5 indicates the step by which $R_1$ and $R_2$ are increased or decreased. More specifically, $R_1=R_1+\Delta$ if $N_1/L-th_1$ is smaller than a certain range, and $R_1=R_1-\Delta$ if $N_1/L-th_1$ is larger than a certain range. Similarly, $R_2=R_2+\Delta$ if $N_2/L-th_2$ is larger than a certain range, and $R_2=R_2-\Delta$ if $N_2/L-th_2$ is smaller than a certain range. With new $R_1$ and $R_2$, $N_1$ and $N_2$ are calculated again. It should be noted that $R_1$ and $R_2$ are updated using L symbols. After updating, $R_1$ and $R_2$ will be stable for a certain period of time. In general, $R_2$ is larger than $R_1$, but $R_1$ may become larger than $R_2$ if $\Delta$ is too large compared to $R_1$ and $R_2$. This problem can be avoid by setting $\Delta$ to a proper value.

According to an embodiment where the step size is optionally adjusted for adapting $R_1$ and/or $R_2$, the radius adapting algorithm may be modified as $R_1=R_1+\Delta_{1+}$ if $N_1/L-th_1$ is smaller than a certain range, and $R_1=R_1-\Delta_{1-}$ if $N_1/L-th_1$ is larger than a certain range. Similarly, $R_2=R_2+\Delta_{2+}$ if $N_2/L-th_2$ is larger than a certain range, and $R_2=R_2-\Delta_{2-}$ if $N_2/L-th_2$ is smaller than a certain range.

It is further noted, for 64QAM constellation, $th_1$ is the sum of the probabilities of the inner 4 symbols, while $th_2$ is the sum of the probabilities of the outer 12 symbols. The probability of each symbol is determined by the probability distribution, which is defined at transmitter side.

Subsequently, the ratio of the number of the inner symbols **403** to the number of the outer symbols **404** $th_1/th_2$ can be used to determine the scaling factor for the inner symbols **403**. As mentioned above, the scaling factor $\alpha$ increases with the ratio $th_1/th_2$ to increase the impact from the inner symbols **403**. Moreover, after the adaptation, the outer symbols **404** are recorded directly, while the inner symbols **403** are recorded after applying the scaling factor a. That is, the complex number values of the outer symbols are directly taken for the frequency offset estimation, while the complex number values of the inner symbols are multiplied by the scaling factor $\alpha$ and then taken for the frequency offset estimation. Also according to an embodiment, the symbols between the first and the second circuits **401, 402** are recorded as zeros, i.e. are ignored for the frequency estimation, to mitigate their impacts on frequency offset estimation, which is regarded as a zero padding operation. Accordingly, the impact of the received symbols can be properly defined, thereby enhancing the accuracy of the frequency offset estimation algorithm.

In an embodiment for 64QAM, $\alpha$ is set to 7 when $th_1/th_2$ reaches its maximal value. Alternatively, $\alpha$ may be set to 1 when $th_1/th_2$ reaches its minimal value. $\alpha$ may also be set to a value between 1 and 7 when $th_1/th_2$ is between its maximal and minimal values. $\alpha$ and $th_1/th_2$ may satisfy the following linear relationship:

$$\frac{\alpha - \min(\alpha)}{th_1/th_2 - \min(th_1/th_2)} = c$$

where c is a constant.

In some embodiments, the complex number values of the outer symbols can be multiplied by the scaling factor $\alpha$ before they are taken for the frequency offset estimation, while the complex number values of the inner symbols may be directly taken for the frequency offset estimation. In some embodiments, the symbols between the first and the second circuits **401, 402** may not be ignored for the frequency offset estimation. Such construction of impact of the received symbols may be optimized based on the predetermined symbol probability distributions and may be adapted to fit time-varying probability distributions.

After the inner symbols **403** and the outer symbols **404** have been properly selected and applied with a suitable scaling factor or been properly recorded, the frequency offset estimating unit **502** determines a frequency offset of the received optical signal. In an embodiment, the frequency offset is determined using a fourth-power algorithm. Thus, a fourth power frequency offset estimation is implemented on the recorded symbols. Based on the fourth-power algorithm, a phase rotation operation may be applied to the inner symbols **403** and the outer symbols **404**. In detail, the phase of the inner symbols **403** and the outer symbols **404** may be multiplied by four due to the fourth-power algorithm to remove the phase modulation of the signal. As a result, a phase drift with constant slope caused by the frequency offset/mismatch between the carrier frequency and the local-oscillator frequency can be determined, which is easily characterized for the frequency offset estimation. That is, the frequency offset can be estimated successfully after applying the fourth power operation to the recorded sequence (i.e. recorded symbols).

As mentioned above, the operation of the proposed frequency offset estimation algorithm is improved by the proper adaptations of the radii for the two circuits **401, 402** as well as the scaling factor for the inner symbols **403**. According to the disclosure, the adaptation can be easily achieved with the knowledge of the probability distribution. Advantageously, the proposed solution can be applied to probabilistically shaped signals with various probability distributions.

It is appreciated that the proposed solution is suitable for modulation formats having multiple moduli with probabilistic shaping, i.e. modulation formats with constellations comprising points having at least two different magnitudes, such as ASK, mQAM (16QAM, 64QAM, etc.), hybrid modulation formats, and so on, so that the constellation points can be divided into inner and outer symbols according to the respective amplitudes.

The functions of the various elements shown in Figs. 2 and 5, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

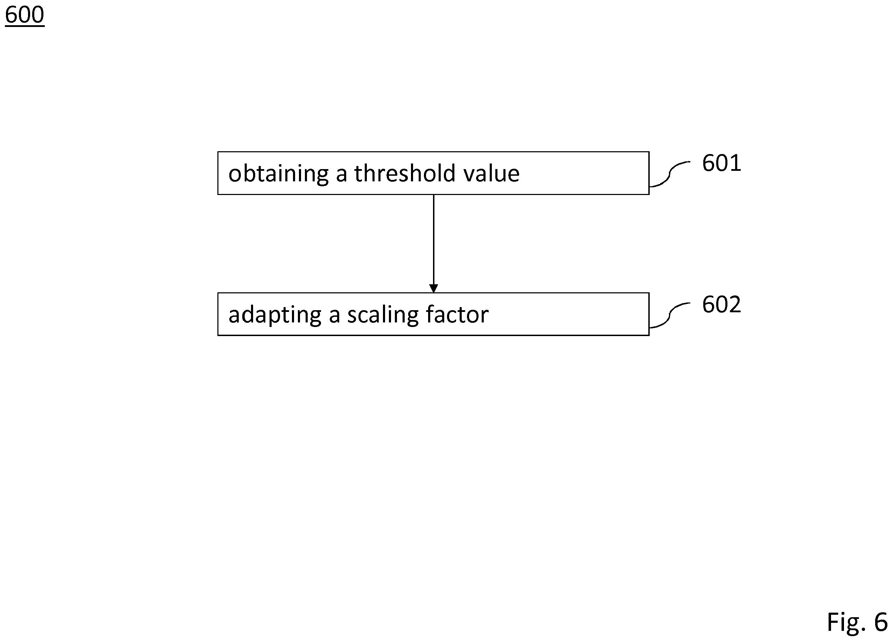

Fig. 6 illustrates processing steps for the proposed symbol processing method, e.g. at a coherent optical receiver, according to embodiments of the disclosure.

The method **600** can be implemented at the receiver side by the frequency offset estimation apparatus **500**, e.g. in a DSP. The method **600** comprises obtaining a second threshold value relating to a plurality of second symbols within a number of received symbols. The second symbols have amplitude values larger than a second amplitude value. The second threshold value depends on a probability distribution of the probabilistically shaped symbols (step **601**). As mentioned above, the second symbols have amplitude values larger than a second amplitude value. The method **600** also comprises adapting a scaling factor, based on the second threshold value, for a number of first symbols within the number of received symbols (step **602**). As mentioned above, the first symbols have amplitude values smaller than a first amplitude value, and the second amplitude value is larger than the first amplitude value. It is appreciated that the proposed symbol processing method may be optionally used for a subsequent frequency offset estimation.

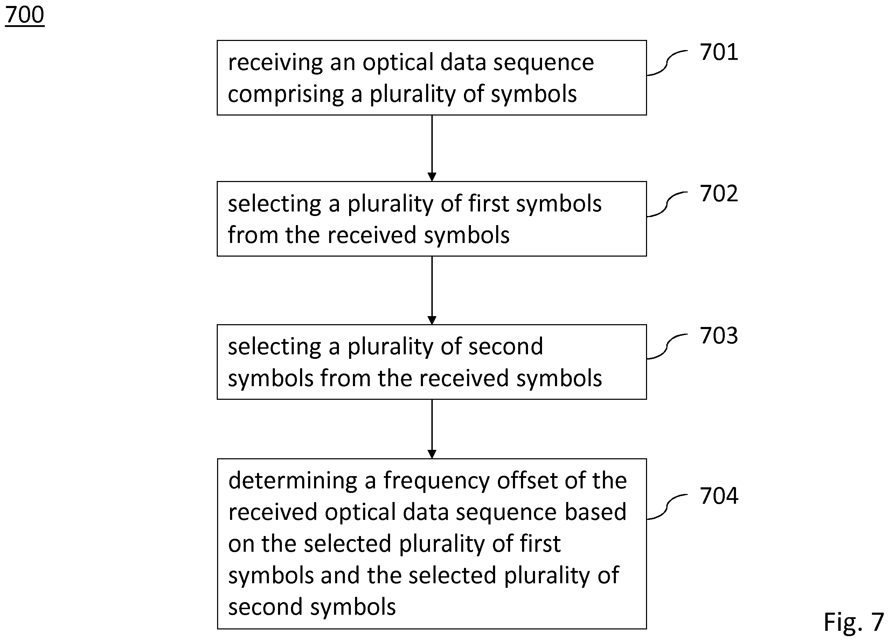

Fig. 7 illustrates processing steps for the proposed frequency offset estimating method, e.g. at a coherent optical receiver, according to embodiments of the disclosure. The method **700** can be implemented at the receiver side by the frequency offset estimation apparatus **500**, e.g. in a DSP. The method **700** comprises receiving (step **701**), from an optical transmission network, an optical data sequence comprising a plurality of samples (or raw symbols), each of which has at least a respective magnitude value. The method **700** also comprises selecting (step **702**) a plurality of first symbols from the received symbols, each of which has a respective first magnitude smaller than a first boundary magnitude value. The method **700** comprises selecting (step **703**) a plurality of second symbols from the received symbols, each of which has a respective second magnitude larger than a second boundary magnitude value. The method **700** further comprises determining (step **704**) a frequency offset of the received optical data sequence based on the selected plurality of first symbols and the selected plurality of second symbols. In embodiments, determining a frequency offset may comprise scaling of first or second symbols after symbol selection and before frequency offset estimation. In addition, the first and second magnitude values may be determined dynamically based on the received signal, or adapted to a dynamically varying symbol probability distribution on the transmitter side.

It should be noted that the apparatus features described above correspond to respective method features that may however not explicitly be described, for reasons of conciseness. The disclosure of the present document is considered to extend also to such method features.

It is therefore appreciated that the proposed method and apparatus enable a robust frequency offset estimation algorithm which provides an accurate frequency offset estimation with low computational complexity. It is further appreciated that the proposed solution can be applied to probabilistically shaped signals with various probability distributions, which provides high flexibility towards optimized transmission systems.

Accordingly, a reliable phase recovery of the signal can thus be achieved, which performs optimized DSP algorithms which are demanded for systems using probabilistically shaped QAM schemes to work close to the Shannon limit.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

It should be further noted that the description and drawings merely illustrate the principles of the proposed apparatus and method. Those skilled in the art will be able to implement various arrangements that, although not explicitly described or shown herein, embody the principles of the invention and are included within its scope. Furthermore, all examples and embodiment outlined in the present document are principally intended expressly to be only for explanatory purposes to help the reader in understanding the principles of the proposed device.

The present inventions may be embodied in other specific apparatus and/or methods. The described embodiments are to be considered in all respects as only illustrative and not restrictive. In particular, the scope of the invention is indicated by the appended claims rather than by the description and figures herein.

**Claims**

1. A method for frequency offset estimation for a number of received probabilistically shaped symbols, the method comprising:

obtaining a first and a second threshold value depending on a probability distribution of the probabilistically shaped symbols, the first threshold value relating to a plurality of first symbols (403) within the received symbols, wherein the first symbols have amplitude values smaller than a first amplitude value, the second threshold value relating to a plurality of second symbols (404) within the received symbols, wherein the second symbols have amplitude values larger than a second amplitude value, wherein the second amplitude value is larger than the first amplitude value;
adapting the first amplitude value based on the number of first symbols and the number of received symbols;
adapting the second amplitude value based on the number of second symbols and the number of received symbols;
adapting (602) a scaling factor for the first symbols (403) depending on the first and second threshold value;
scaling the first symbols (403) with the adapted scaling factor; and
determining a frequency offset for the received symbols based on the scaled first symbols and the second symbols.

2. The method of claim 1, further comprising:

counting the number of first symbols (403) within the number of received symbols;
determining a relationship between the counted number of first symbols (403) and the number of received symbols; and
adapting the first amplitude value depending on the determined relationship .

3. The method of claim 1 or 2, further comprising:

counting (601) a number of second symbols (404) within the number of received symbols, determining a relationship between the counted number of second symbols (404) and the number of received symbols; and
adapting the second amplitude value depending on the determined relationship.

4. The method of any previous claim, further comprising:

adapting the first amplitude value based on a first ratio of the number of first symbols (403) to the number of received symbols; and
adapting the second amplitude value based on a second ratio of the number of second symbols (404) to the number of received symbols.

5. The method of claim 4, the adapting of the first amplitude value and the second amplitude value comprising:

comparing the first ratio with a first threshold value; and

comparing the second ratio with a second threshold value .

6. The method of claim 5, the adapting of the first amplitude value and the second amplitude value further comprising:

increasing the first amplitude value if the first ratio is smaller than the first threshold value; and/or
decreasing the second amplitude value if the second ratio is smaller than the second threshold value .

7. The method of any previous claim, further comprising determining the scaling factor based on a symbol distribution ratio of the first threshold value to the second threshold value.

8. The method of any of claims 1-7, further comprising applying a zero padding operation for a number of third symbols within a number of received symbols, wherein the third symbols have amplitude values larger than the first amplitude value and smaller than the second amplitude value.

9. The method of any of the previous claims, wherein the received symbols comprise probabilistically-shaped Quadrature Amplitude Modulation, PS QAM, symbols having a dynamically changeable probability distribution.

10. The method of claim 1, wherein the frequency offset is determined using a fourth-power algorithm, further comprising applying a phase rotation operation to the scaled first symbols (403) and the second symbols (404) based on the fourth-power algorithm.

11. An apparatus, comprising:

a processor (200); and
memory with instructions stored thereon, wherein the instructions when executed on said processor (200) cause the processor (200) to perform all the steps of the method according to any of claims 1-10.

12. An optical receiver, comprising:

an optical-to-electrical, O/E, converter;
an analog-to-digital, A/D, converter (202); and
an apparatus according to claim 11.

**Patentansprüche**

1. Verfahren zur Frequenz-Offset-Schätzung für eine Anzahl von empfangenen, probabilistisch geformten Symbolen, wobei das Verfahren umfasst:

Erhalten eines ersten und eines zweiten Schwellenwerts in Abhängigkeit von einer Wahrscheinlichkeitsverteilung der probabilistisch geformten Symbole, wobei sich der erste Schwellenwert auf mehrere erste Symbole (403) innerhalb der empfangenen Symbole bezieht,
wobei die ersten Symbole Amplitudenwerte aufweisen, die kleiner als ein erster Amplitudenwert sind, wobei sich der zweite Schwellenwert auf mehrere zweite Symbolen (404) innerhalb der empfangenen Symbole bezieht, wobei die zweiten Symbole Amplitudenwerte aufweisen, die größer als ein zweiter Amplitudenwert sind, wobei der zweite Amplitudenwert größer als der erste Amplitudenwert ist;
Anpassen des ersten Amplitudenwerts basierend auf der Anzahl erster Symbole und der Anzahl empfangener Symbole;
Anpassen des zweiten Amplitudenwerts basierend auf der Anzahl zweiter Symbole und der Anzahl empfangener Symbole;
Anpassen (602) eines Skalierungsfaktors für die ersten Symbole (403) in Abhängigkeit von dem ersten und dem zweiten Schwellenwert;
Skalieren der ersten Symbole (403) mit dem angepassten Skalierungsfaktor; und
Bestimmen eines Frequenz-Offsets für die empfangenen Symbole basierend auf den skalierten ersten Symbolen und den zweiten Symbolen.

2. Verfahren nach Anspruch 1, ferner umfassend:

Zählen der Anzahl erster Symbole (403) innerhalb der Anzahl empfangener Symbole;
Bestimmen einer Beziehung zwischen der gezählten Anzahl erster Symbole (403) und der Anzahl empfangener Symbole; und
Anpassen des ersten Amplitudenwertes in Abhängigkeit von der bestimmten Beziehung.

3. Verfahren nach Anspruch 1 oder 2, ferner umfassend:

Zählen (601) einer Anzahl zweiter Symbole (404) innerhalb der Anzahl empfangener Symbole;
Bestimmen einer Beziehung zwischen der gezählten Anzahl zweiter Symbole (404) und der Anzahl empfangener Symbole; und
Anpassen des zweiten Amplitudenwertes in Abhängigkeit von der bestimmten Beziehung.

4. Verfahren nach einem der vorhergehenden Ansprüche, ferner umfassend:

Anpassen des ersten Amplitudenwerts basierend auf einem ersten Verhältnis der Anzahl erster Symbole (403) zu der Anzahl empfangener Symbole; und

Anpassen des zweiten Amplitudenwerts basierend auf einem zweiten Verhältnis der Anzahl zweiter Symbole (404) zu der Anzahl empfangener Symbole.

5. Verfahren nach Anspruch 4, wobei das Anpassen des ersten Amplitudenwerts und des zweiten Amplitudenwerts umfasst:

Vergleichen des ersten Verhältnisses mit einem ersten Schwellenwert; und
Vergleichen des zweiten Verhältnisses mit einem zweiten Schwellenwert.

6. Verfahren nach Anspruch 5, wobei das Anpassen des ersten Amplitudenwerts und des zweiten Amplitudenwerts ferner umfasst:

Erhöhen des ersten Amplitudenwerts, wenn das erste Verhältnis kleiner als der erste Schwellenwert ist; und/oder
Verringern des zweiten Amplitudenwerts, wenn das zweite Verhältnis kleiner als der zweite Schwellenwert ist.

7. Verfahren nach einem der vorhergehenden Ansprüche, ferner umfassend Bestimmen des Skalierungsfaktors basierend auf einem Symbolverteilungsverhältnis des ersten Schwellenwerts zu dem zweiten Schwellenwert.

8. Verfahren nach einem der Ansprüche 1 bis 7, ferner umfassend Anwenden einer Nullen-Auffüllungsoperation für eine Anzahl von dritten Symbolen innerhalb einer Anzahl von empfangenen Symbolen, wobei die dritten Symbole Amplitudenwerte aufweisen, die größer als der erste Amplitudenwert und kleiner als der zweite Amplitudenwert sind.

9. Verfahren nach einem der vorhergehenden Ansprüche, wobei die empfangenen Symbole probabilistisch geformte Quadratur-Amplitudenmodulations-, PS-QAM, Symbole mit einer dynamisch veränderbaren Wahrscheinlichkeitsverteilung umfassen.

10. Verfahren nach Anspruch 1, wobei der Frequenz-Offset unter Verwendung eines Algorithmus der vierten Potenz bestimmt wird, ferner umfassend Anwenden einer Phasendrehoperation auf die skalierten ersten Symbole (403) und die zweiten Symbole (404) basierend auf dem Algorithmus der vierten Potenz.

11. Vorrichtung, umfassend:

einen Prozessor (200); und
Speicher mit darauf gespeicherten Anweisungen, wobei die Anweisungen, wenn sie auf dem Prozessor (200) ausgeführt werden, den Prozessor (200) veranlassen, alle Schritte des Verfahrens nach einem der Ansprüche 1 bis 10 durchzuführen.

12. Optischer Empfänger, umfassend:

einen optoelektronischen, O/E, Wandler;
einen Analog-Digital-, A/D, Wandler (202); und
eine Vorrichtung nach Anspruch 11.

**Revendications**

1. Procédé pour une estimation de décalage de fréquence pour un certain nombre de symboles reçus formés de manière probabiliste, le procédé comprenant :

l'obtention d'une première et d'une seconde valeur de seuil en fonction d'une distribution de probabilité des symboles formés de manière probabiliste, la première valeur de seuil se rapportant à une pluralité de premiers symboles (403) dans les symboles reçus, dans lequel les premiers symboles présentent des valeurs d'amplitude inférieures à une première valeur d'amplitude, la seconde valeur de seuil se rapportant à une pluralité de deuxièmes symboles (404) dans les symboles reçus, dans lequel les deuxièmes symboles présentent des valeurs d'amplitude supérieures à une seconde valeur d'amplitude, dans lequel la seconde valeur d'amplitude est supérieure à la première valeur d'amplitude ;
l'adaptation de la première valeur d'amplitude en se basant sur le nombre de premiers symboles et le nombre de symboles reçus ;
l'adaptation de la seconde valeur d'amplitude en se basant sur le nombre de deuxièmes symboles et le nombre de symboles reçus ;
l'adaptation (602) d'un facteur d'échelle pour les premiers symboles (403) en fonction de LA première et de la seconde valeur de seuil ;
la mise à l'échelle des premiers symboles (403) avec le facteur d'échelle adapté ; et
la détermination d'un décalage de fréquence pour les symboles reçus en se basant sur les premiers symboles et les deuxièmes symboles mis à l'échelle.

2. Procédé selon la revendication 1, comprenant en outre :

le comptage du nombre de premiers symboles (403) dans le nombre de symboles reçus ;
la détermination d'une relation entre le nombre compté de premiers symboles (404) et le nombre de symboles reçus ; et
l'adaptation de la première valeur d'amplitude en fonction de la relation déterminée.

**3.** Procédé selon la revendication 1 ou 2, comprenant en outre :

le comptage (601) d'un certain nombre de deuxièmes symboles (404) dans le nombre de symboles reçus ;
la détermination d'une relation entre le nombre compté de deuxièmes symboles (403) et le nombre de symboles reçus ; et
l'adaptation de la seconde valeur d'amplitude en fonction de la relation déterminée.

**4.** Procédé selon l'une quelconque des revendications précédentes, comprenant en outre :

l'adaptation de la première valeur d'amplitude en se basant sur un premier rapport entre le nombre de premiers symboles (403) et le nombre de symboles reçus ; et
l'adaptation de la seconde valeur d'amplitude en se basant sur un second rapport entre le nombre de deuxièmes symboles (404) et le nombre de symboles reçus.

**5.** Procédé selon la revendication 4, l'adaptation de la première valeur d'amplitude et de la seconde valeur d'amplitude comprenant :

la comparaison du premier rapport avec une première valeur de seuil ; et
la comparaison du second rapport avec une seconde valeur de seuil.

**6.** Procédé selon la revendication 5, l'adaptation de la première valeur d'amplitude et de la seconde valeur d'amplitude comprenant en outre :

l'augmentation de la première valeur d'amplitude si le premier rapport est inférieur à la première valeur de seuil ; et/ou
la diminution de la seconde valeur de seuil si le second rapport est inférieur à la seconde valeur de seuil.

**7.** Procédé selon l'une quelconque des revendications précédentes, comprenant en outre la détermination du facteur d'échelle en se basant sur un rapport de distribution de symbole de la première valeur de seuil à la seconde valeur de seuil.

**8.** Procédé selon l'une quelconque des revendications 1 à 7, comprenant en outre l'application d'une opération de remplissage de zéro pour un certain nombre de troisièmes symboles dans un certain nombre de symboles reçus, dans lequel les troisièmes symboles présentent des valeurs d'amplitude supérieures à la première valeur d'amplitude et inférieures à la seconde valeur d'amplitude.

**9.** Procédé selon l'une quelconque des revendications précédentes, dans lequel les symboles reçus comprennent des symboles de modulation d'amplitude en quadrature formés de manière probabiliste (QAM PS) ayant une distribution de probabilité pouvant changer de manière dynamique.

**10.** Procédé selon la revendication 1, dans lequel le décalage de fréquence est déterminé à l'aide d'un algorithme à la quatrième puissance, comprenant en outre l'application d'une opération de rotation de phase aux premiers symboles mis à l'échelle (403) et aux seconds symboles (404) en se basant sur l'algorithme à la quatrième puissance.

**11.** Appareil comprenant :

un processeur (200) ; et
une mémoire sur laquelle sont stockées des instructions, dans lequel les instructions, lorsqu'elles sont exécutées sur ledit processeur (200), contraignent le processeur (200) à réaliser toutes les étapes du procédé selon l'une quelconque des revendications 1 à 10.

**12.** Récepteur optique comprenant :

un convertisseur optique-électrique (O/E) ;
un convertisseur analogique-numérique (A/N) (202) ; et
un appareil selon la revendication 11.

101  102

103  104

105

(a)

111  112

113  114

115

116

(b)

EP 3 306 884 B1

Fig. 1

Fig. 2

Fig. 3

Fig. 4

Fig. 5

600

| obtaining a threshold value | 601 |

| adapting a scaling factor | 602 |

EP 3 306 884 B1

Fig. 6

700

701 receiving an optical data sequence comprising a plurality of symbols

702 selecting a plurality of first symbols from the received symbols

703 selecting a plurality of second symbols from the received symbols

704 determining a frequency offset of the received optical data sequence based on the selected plurality of first symbols and the selected plurality of second symbols

Fig. 7

EP 3 306 884 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BUCHALI.** Experimental Demonstration of Capacity Increase and Rate-Adaption by Probabilistically Shaped 64-QAM. *Proc. European Conference on Optical Communication,* September 2015